# EUROPEAN PATENT APPLICATION

(11) **EP 4 814 219 A1**
(43) Date of publication of application: **30.09.2026**
(21) Application number: 25166450.4
(22) Date of filing: 26.03.2025
(51) Int. Cl.: E04B 1/14, E04C 2/292, E04C 2/32, E04D 3/35, F16B 5/00, E04C 2/00

(54) **MODULAR BUILDING ELEMENT AND METHOD**

(71) Applicant: nor:houses A/S, 3230 Græsted (DK)
(72) Inventor: KJÆR, Nikolai, 3220 Græsted (DK)
(74) Representative: Dragsted Partners A/S

(57) **Abstract**

The present invention relates to a modular building element for building a construction, comprising a first cover profile comprising a front face, a back face, a base portion, a first projection, a second projection and a third projection, the projections projecting from the base portion, and an insulation assembly comprising a first insulation part having a first side abutting the back face, and, the insulation assembly further comprising an opposite second side with two oppositely positioned end sides and two oppositely positioned contact sides, wherein each projection is formed of a first projection section extending perpendicular from the base portion, an intermediate portion, and a first protrusion extending from the projection section forming a stop face being parallel to and facing the base portion, the projection section being connected with the intermediate portion. Moreover, the present invention also relates to a modular building system.

## Description

The present invention relates to a modular building element for building a construction. Moreover, the present invention also relates to a modular building system.

When building a construction or a building, it is important to understand how a building will perform in a fire. Minimum construction requirements are established to help maintain structural integrity for the time needed for evacuation or relocation to a safe location in the building. The combustibility of a material gives an indication of how quickly a fire will grow. Both of these aspects are essential to fire and life safety. Therefore, each building material or component are rated in relation to combustibility and structural integrity. When building light weight constructions such as a modular building system comprising a plurality of building elements being assembled to form a building section, such as a wall, a floor and/or a ceiling, the fire resistance rating of a building's structural elements is a main quality factor. The highest fire resistance rating of a building's structural elements is classification A, second highest is B and so forth. Inherently, non-combustible materials are concrete, glass, steel and masonry. Insulation is categorised as glass or stone and thus non-combustible as steel plates, screws and brackets, but adhesive for gluing two parts together is a combustible material.

The modular building system, e.g. known from EP3158137, has to be designed to be easy to handle and mount at the site while maintaining its structural integrity and while contributing to the structural integrity of the whole construction. The weight of each element is important, as the higher the weight of e.g. a roof element, the higher structural strength is required by the walls holding the roof. The light-weight elements have to be designed having low weight but still have to be able to hold the required weight of other elements. Adhesive is used instead of screws and brackets to keep the weight down but it is also used because the use of penetrating elements such as screws requires other features to ensure a waterproof connection which increases the price. However, using adhesive decreases the fire resistance and to some extent also the structural strength.

Therefore, the design has to level pros and cons in order to make the perfect combination of fire resistance, low weight and structural strength.

It is an object of the present invention to wholly or partly overcome the above disadvantages and drawbacks of the prior art. More specifically, it is an object to provide an improved modular building system improving at least one of the following parameters fire resistance, low weight low and structural strength compared to known solutions without reducing the quality of the other parameters while still be easy to mount and handle at the construction site.

The above objects, together with numerous other objects, advantages and features, which will become evident from the below description, are accomplished by a solution in accordance with the present invention by a modular building element for building a construction, comprising:
- a first cover profile comprising a front face, a back face, a base portion, a first projection, a second projection and a third projection, the projections projecting from the base portion, and
- an insulation assembly comprising a first insulation part having a first side abutting the back face, the insulation assembly further comprising an opposite second side with two oppositely positioned end sides and two oppositely positioned contact sides,
wherein each projection is formed of a first projection section extending perpendicular from the base portion, an intermediate portion, and a first protrusion extending from the projection section forming a stop face being parallel to and facing the base portion, the projection section being connected with the intermediate portion.

In addition, the first cover profile may be formed as one monolithic whole.

Moreover, the intermediate portion may be arranged parallel to the base portion.

Furthermore, the insulation assembly may comprise a rigid body part projecting from the first side of the insultation part and projecting into the second projection and abutting the projection section forming a cavity between the rigid body part and the protrusion for receiving adhesive.

Additionally, the cavity may have a cavity extension along the projection section having a section length, the cavity extension being less than 50% of the section length, preferably less 30% more preferably less than 20%.

Also, the first projection may form a male portion, the third projection forming a female portion for receiving and interlocking the male portion of a neighbouring modular building element.

In addition, the male portion may extend in a plane substantially perpendicular to the projection section and may be arranged parallel to the base portion.

Moreover, the female portion may extend in a plane substantially perpendicular to the projection section and may be arranged parallel to the base portion.

Furthermore, the male portion may have an end section having a first male outer height and a second male outer height, the first male outer height being greater than the second male outer height.

Additionally, the female portion may have an end section having a first female outer height and a second female height, the first female outer height being greater than the second female outer height.

Also, the first female outer height may be greater than first male outer height.

In addition, the female portion may have a first inner female height at the end section and a second inner female height, the male portion having a first inner male height at the end section and a second inner male height, and the first male outer height being larger than the second inner female height.

Moreover, the female portion may have a female guide section for locking the male portion and the female portion of a neighbouring modular building element together.

The modular building element may further comprise a second cover profile having a base portion connected to the second side of the insulation assembly.

Furthermore, each cover profile may be adapted to cover the width of the first side and the second side.

In addition, the end section of the female portion may abut the intermediate portion.

Also, the modular building element may further comprise a second insulation part having a first side abutting the back face and being connected to the base portion, the rigid body part being arranged between the first insulation part and the second insulation part.

Additionally, the second projection may comprise a second projection section extending perpendicular from the base portion, and second projection comprising a second protrusion extending from the projection section forming a second stop face being parallel to and facing the base portion, the projection section being connected with the intermediate portion, the intermediate portion connecting the first and second protrusions.

The present invention also relates to a modular building system comprising a plurality of modular building elements according to any of the preceding claims, wherein the male portion of one modular building element is connected into and locked together with a second portion of a neighbouring modular building element for forming a wall, a floor or a roofing of a building.

Moreover, the first projection and the third projection when connected and locked together may have an outer shape that corresponds to an outer shape of the second projection.

The modular building may further comprise a least one panel and at least one first connection element for connecting the panel on the front face of the modular building element, and the connection element may comprise a locking face and a base face, the base face abutting the base portion of the cover profile, and the locking face abutting the stop face, the locking face and the base face being arranged with a distance corresponding to a section length so as to lock the connection element to the front face, the connection element having a first part overlapping an edge of the panel to fasten the panel to the front face and a second part engaging a groove in a neighbouring panel.

Also, the first connection element panels may have an elongation extending along the projections of the profiles can be fastened.

In addition, the connection element may have a connection length corresponding to the length between two adjacent projection sections.

Moreover, the modular building system may further comprise a least one panel and at least one second connection element for connecting the panel on the front face of the modular building element, the protrusion having a protrusion height, and the second connection element may comprise a groove having a groove height corresponding to the protrusion height and a connection element length corresponding a length between two adjacent protrusions so as to lock the connection element to the front face, the connection element having a first part overlapping an edge of the panel to fasten the panel to the front face and a second part engaging a groove in a neighbouring panel.

Furthermore, the modular building system may further comprising a first panel part and a second panel part, each of the panel parts having a panel groove in a first side face having a groove height corresponding to a protrusion height of the protrusion, each of the panel parts having a second side face opposing the first side face, the first side face of the first panel part abutting the second side face of the second panel part in order to lock the first panel part and the second panel part between two adjacent projections.

Additionally, a third panel part may be squeezed in between the first panel part and the second panel part for locking the panel parts to the front face in between two adjacent projections.

Finally, the panel may be a floor panel, a facing panel, or similar panel for covering the front face of the modular building element.

The invention and its many advantages will be described in more detail below with reference to the accompanying schematic drawings, which for the purpose of illustration show some non-limiting embodiments and in which:
Fig. 1 shows a prior art profile known from EP3158137,
Fig. 2 shows a front view of a cover profile of a modular building element for building a construction,
Fig. 3 shows another modular building element with insulation for building a construction in perspective,
Fig. 4 shows the cover profile of Fig. 1 and part of a neighbouring cover profile of a neighbouring modular building element,
Fig. 5 shows an enlarged view of the projections of the cover profile of Fig. 1,
Fig. 6 shows in perspective a modular building element with insulation connected to a neighbouring modular building element forming part of a construction,
Fig. 7 shows the front face of several modular building elements mounted together and connection elements for mounting of panel to the front face,
Fig. 8 shows the front face of several modular building elements mounted together and another connection element for mounting of panel to the front face,
Fig. 9 shows the front face of several modular building elements mounted together and several connection elements mounting both longitudinal and vertical panels to the front face,
Fig. 10 shows the front face of several modular building elements mounted together where panels are mounted without use of connection elements,
Fig. 11 shows the mounting of panels of Fig. 10 at different stages, and
Fig. 12 shows the front face of several modular building elements mounted together where other panels are mounted without use of connection elements.

All the figures are highly schematic and not necessarily to scale, and they show only those parts which are necessary in order to elucidate the invention, other parts being omitted or merely suggested.

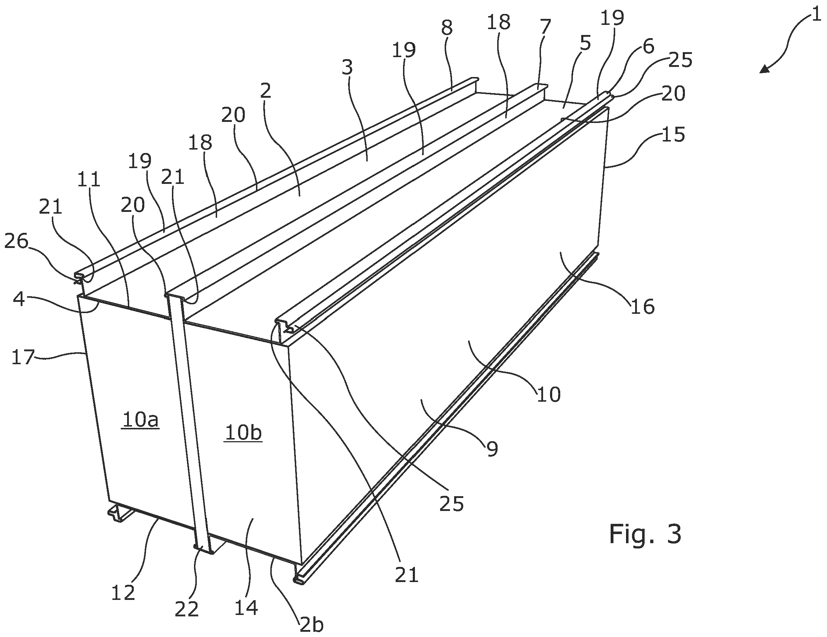

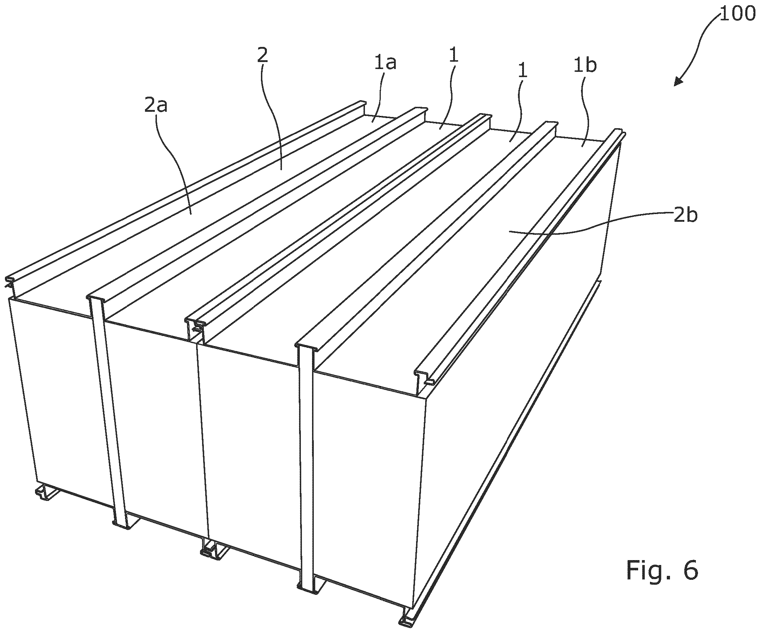

Fig. 3 shows a modular building element 1 for building a construction, comprising a first cover profile 2 and a second cover profile 2b and an insulation assembly 9 arranged therebetween. The first cover profile 2 comprises a front face 3, a back face 4, a base portion 5, a first projection 6, a second projection 7 and a third projection 8, the projections projecting from the base portion. The insulation assembly 9 comprises a first insulation part 10 having a first side 11 abutting the back face. The insulation assembly further comprises an opposite second side 12 with two oppositely positioned end sides 14, 15 and two oppositely positioned contact sides 16, 17 for contacting a neighbouring modular building element 1b for forming a construction section, as shown in Fig. 6. The cover profile is formed as one monolithic whole and typically bent into its final shape from a flat steel plate. Each projection 6, 7, 8 is formed of a first projection section 18 extending perpendicular from the base portion, an intermediate portion 19, and a first protrusion (20) extending from the projection section forming a stop face 21 being parallel to and facing the base portion. The projection section is connected with the intermediate portion, and the intermediate portion is arranged parallel to the base portion.

The stop face being parallel to the base portion provides an edge increasing the ability to easily mount other parts or panels to the front face of the cover profile, thus providing easier mount flooring, roof panels or similar to the modular building elements when assembled at the site into a modular building system 100, partly shown in Fig. 6. This is due to the fact that the parts or panels have a well-defined mounting stop face or protrusion to grab in or around. The stop face results in a well-defined mounting point, and together with the base portion the stop face forms a distance and thus a groove for other parts or panels to fit into.

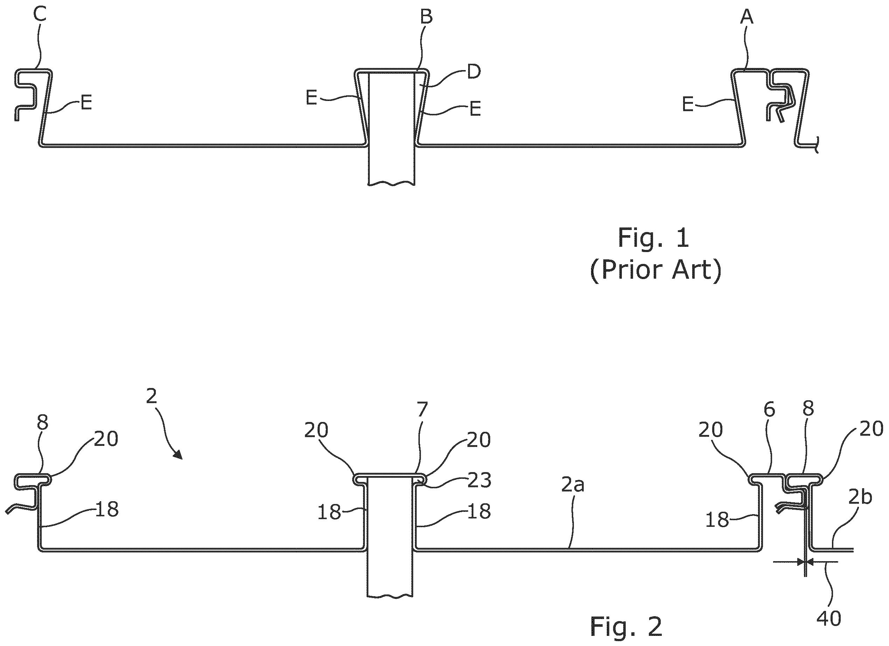

As can be seen in Figs. 2-5, the second projection comprises a second projection section (8b extending perpendicular from the base portion, and the second projection comprises a second protrusion 20b extending from the projection section 18b forming a second stop face 21b being parallel to and facing the base portion, the projection section being connected with the intermediate portion, and the intermediate portion connecting the first and second protrusions. The first protrusion thus faces the third projection, and the second protrusion faces the first projection. Thus, the first projection 6 of one cover profile 2, 2a and the third projection 8 of a neighbouring cover profile 2b when connected and locked together have an outer shape that corresponds to an outer shape of the second projection 7, as shown in Fig. 2. Thus, easy mounting of other parts and panels to the front face is maintained as the cross-sectional shaped space between two projections is the same.

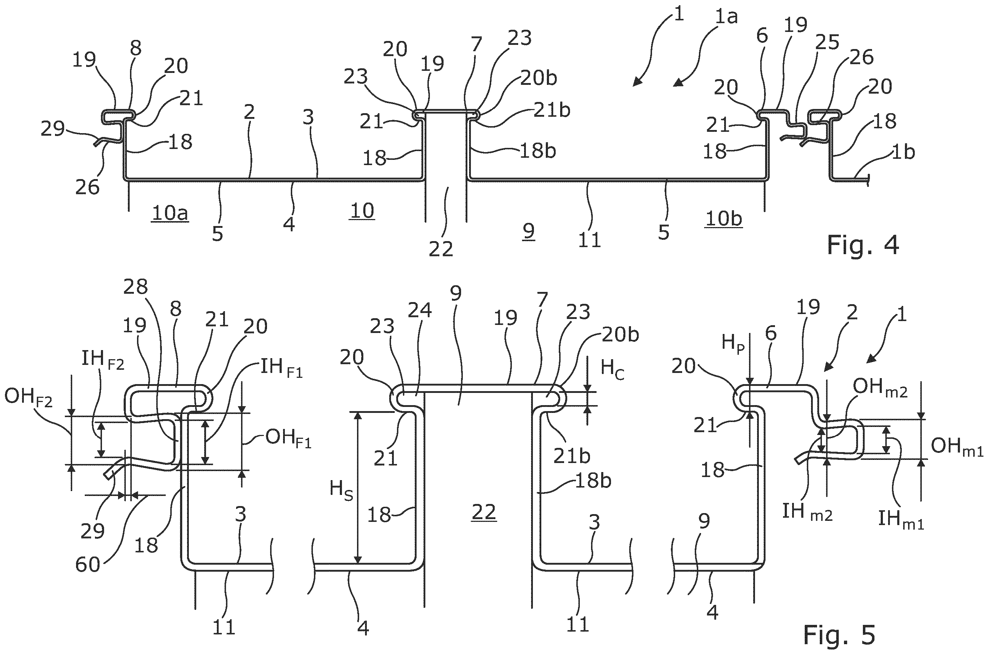

In Figs. 2, 4 and 5, the insulation assembly comprises a rigid body part 22 projecting from the first side and projecting into the second projection and abutting the projection section forming a cavity 23 between the rigid body part and the protrusion for receiving adhesive 24. As can be seen in Fig. 1, a prior art solution projection B has a different shape where the sides E are inclined forming a dovetailed profile resulting in a space between the insulation and the sides E which is much larger than the cavity 23 formed in the present invention. By having the cover profile with protrusions 20 and the projection sections 18 extending perpendicular from the base portion, the second projection provides a very small cavity when the rigid body part 22 is inserted. Before inserting the rigid body part 22, adhesive is added into the projection and as the rigid body part occupies the space within the second projection, a very little cavity is left for accumulating adhesive this results in a higher fire resistance rating, i.e. from class B to class A, as adhesive is combustible. The prior art design results in an amount of approximately 140 gram of adhesive compared to the design of the present invention which only results in an amount of approximately 50 gram of adhesive. Furthermore, as the rigid body part is inserted into the second projection, the design shown in Fig. 2 forces the adhesive to move along the side of the rigid body part ensuring a better distribution of adhesive than in prior art solutions, while the projection sections 18 provide a squezing force onto the adhesive connection which increases the adhesive force and thus the overall strength of the building element. As shown in Fig. 5, the cavity has a cavity extension H_{C} along the projection section having a section length H_{S}, the cavity extension being less than 50% of the section length, preferably less 30% more preferably less than 20%.

In order to mount and lock two modular building elements 1, 1a, 1b together as shown in Fig. 6, the first projection 6 of the modular building element forms a male portion 25, and the third projection forms a female portion 26 for receiving and interlocking the male portion of the neighbouring modular building element 1b. In Fig. 2, the male portion is mounted and locked into the female portion and in Fig. 4, the male portion and the female portion is shown in an unlocked state. As shown in the enlarged view of Fig. 5, the male portion extends in a plane substantially perpendicular to the projection section 18 and is arranged parallel to the base portion 3. The female portion also extends in a plane substantially perpendicular to the projection section and arranged parallel to the base portion. The male portion has an end section 27 having a first male outer height OH_{M1} and a second male outer height OH_{M2}, and the first male outer height is greater than the second male outer height. The female portion has an end section 28 having a first female outer height OH_{F1} and a second female height OH_{F2}, the first female outer height being greater than the second female outer height. The end sections 27, 28 are arranged in a plane extending perpendicular to the base portion 3. The first female outer height is greater than first male outer height so that the female portion can receive the male portion. The female portion has a first inner female height IH_{F1} at the end section 28 and a second inner female height (IH_{F2}) at the open end, and the male portion has a first inner male height IH_{M1} at the end section and a second inner male height IH_{M2}. The first male outer height is larger than the second inner female height so that the male portion is locked into the female portion as shown in Fig. 2. Having the first male outer height being larger than the second inner female height results in a squeezing force which is greater compared to prior art and which results in a better sealing ability of the male/female connection connecting two modular building elements. This improved male/female connection connecting two modular building elements has proven to be so effective that the insulation parts 10, 10a, 10b do not have to be connected by means of adhesive to the base portion of the cover profile, nor do the contact side 16 of one modular building element have to be adhered to the contact side 17 of another modular building element. This effective connection thus reduces the combustibility of the modular building element and thus improves the fire rating. The female portion has a female guide section 29 for guiding the male portion and for locking the male portion and the female portion of a neighbouring modular building element together. Furthermore, as shown in Fig. 5, the female guide section 29 is made as a bend where the bend is slightly displaced creating a distance 60 so that the male portion 25 meets the female guide section 29 first which opens the female portion slightly up and guides the male portion into place. As shown in Fig. 2, there is a distance 40 in the mounted position where the male portion is in the female portion so as to ensure that the male portion is firmly in place and locked by the female portion and is not abutting the end section first, hindering a further movement of the male portion to its correct position. Furthermore, the increased squeezing force compared to prior art increases the friction between two cover proles and increases the shear force and thus the overall stability and structural integrity of the building.

The modular building element may further comprise a second cover profile 2b having a base portion connected to the second side of the insulation assembly, as shown in Figs. 3 and 6. Each cover profiles are adapted to cover the width of the first side and the second side, and the shape of the cover profiles makes it easy to mount other parts or panels for covering the front face of the cover profiles. The modular building element further comprises a second insulation part 10b having a first side 11 abutting the back face and being connected to the base portion, the rigid body part 22 being arranged between and glued to the first insulation part 10, 10a and the second insulation part 10b.

As shown in Fig 5, the end section 28 of the female portion abuts the intermediate portion 18. In this way, the female portion does not yield when the worker pushes a male portion of a neighbouring modular building element 2b into the female portion resulting in a quick and prompt locking connection when the worker has no doubt that the connection is properly in place. Furthermore, the abutment of the end section 28 of the female portion results in a stronger connection between the male and female portions.

A building or construction is mounted from a plurality of modular building elements assembled into modular building system 100, so that the modular building elements form the roofing, the walls, and/or the floor. Common for modular building elements is that the male portion of one modular building element 2, 2a is connected into and locked together with a second portion of a neighbouring modular building element 2b for forming the wall, the floor or the roofing of a building.

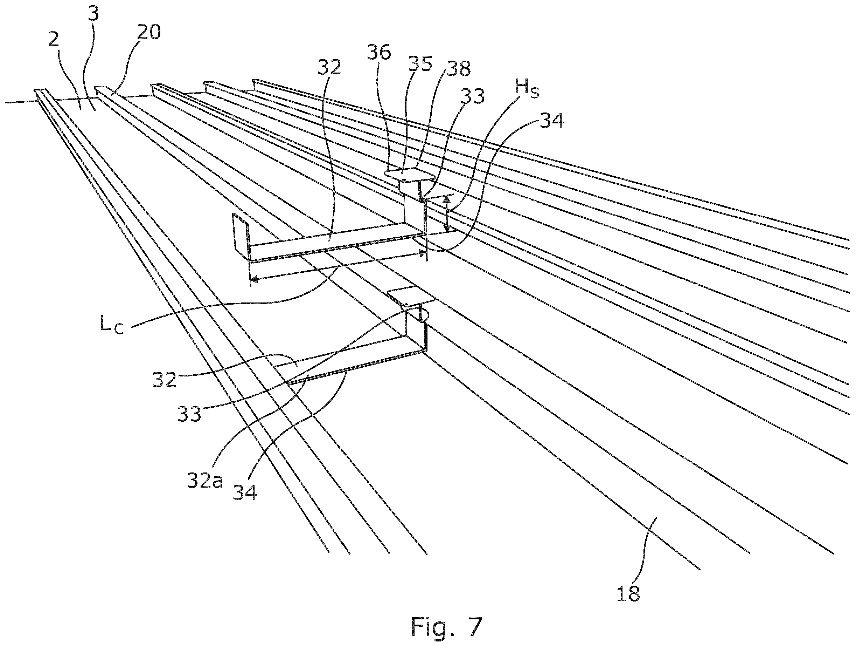

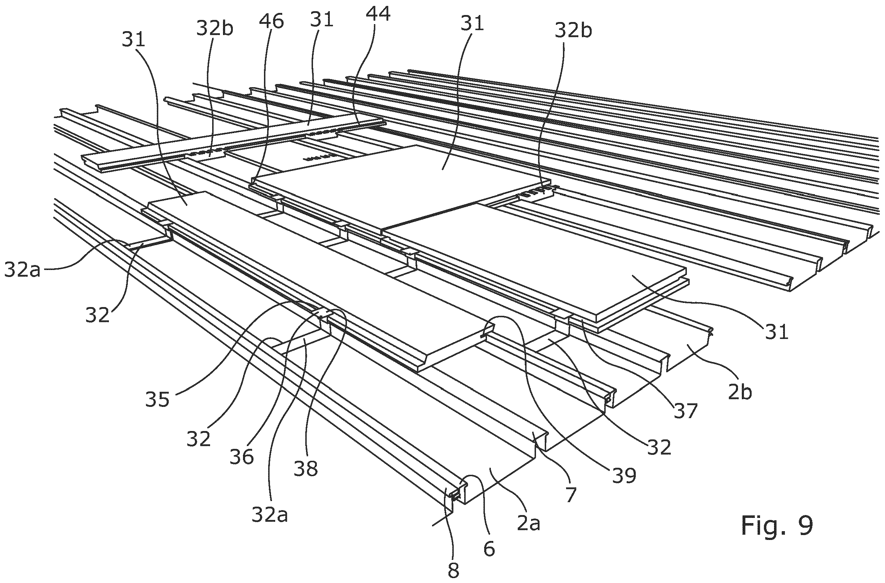

Subsequent to assembly of the modular building system into a wall, a floor or a roofing of a building, as partly shown in Fig. 6, the front face of the cover profiles can be covered with panels, e.g. of wood for making a wood floor or tiles panels for making the wall look like a masonry. For making such wood covering or the like, the modular building system further comprises a plurality of panels 31, shown in Fig. 9, and at least one first connection element 32, shown in Fig. 7, for connecting the panel on the front face of the modular building element. The connection element 32 comprises a locking face 33 and a base face 34, and the base face abuts the base portion of the cover profile, and the locking face abuts the stop face. The locking face and the base face are arranged with a distance between them corresponding to a section length H_{S} so as to lock the connection element to the front face. The connection element has a first part 36 overlapping an edge 37 of the panel to fasten the panel to the front face and the connection element has a second part 38 engaging a groove 39 in a neighbouring panel 31b, as shown in Fig. 9. Using the first connection element 32, 32a, panels having an elongation extending along the projections of the profiles can be fastened to the front face of the cover profile. The connection element has a connection length L_{C} corresponding to the length L_{PS} between two adjacent projection sections so as to lock the connection element 32 in between two adjacent projections 6, 7, 8.

When mounting the first connection element 32, 32a, the panel is arranged in the intended position, and the connection element is clicked in place between two projections, e.g. the first and second projections, so that the second part 38 overlaps the edge 37 of the panel. Then a neighbouring panel 31b is arrnaged by locking its groove 39 into the first part 36 of the already mounted connection element and another connection element 32, 32a is clicked in place in the space between the neighbouring projection, i.e. the speace between the third and second projections, so that the second part 38 overlaps the edge 37 of the neighbouring panel 31b. This prodedure is repeated until all the panels are mounted to the front face and the worker may use several connection elements in the same space between two projections for mounting one panel. Hereby, a very simple mounting of panel covering is provided by the use of the protrusions and the stop face and without using screws or similar penetration elements deteriorating the water resistance of the cover profile of the building element.

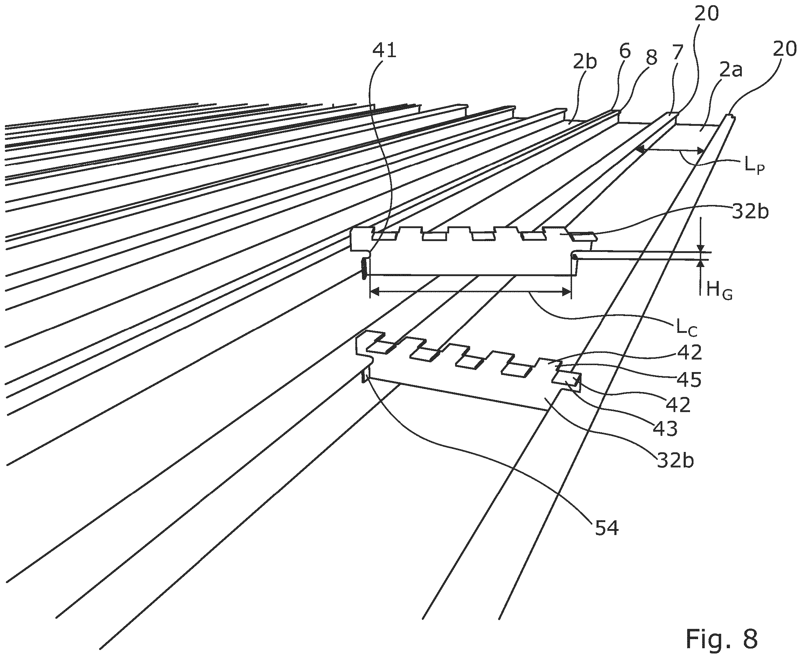

For making such wood covering or the like, the modular building system 100, as shown in Fig. 8, may in another aspect comprise at least one second connection element 32b different from the first connection element 32a for connecting the panel on the front face of the modular building element. The protrusion 20 has a protrusion height H_{P}, shown in Fig. 5, and the second connection element 32b comprises a groove 41 having a groove height H_{G}, shown in Fig. 8, corresponding to the protrusion height. Also, the second connection element 32b comprises a connection element length L_{C} corresponding a length LP between two adjacent protrusions so as to lock the connection element to the front face, and the connection element 32b has a first part 43 overlapping an edge 44 of the panel, as shown in Fig. 9, to fasten the panel to the front face and a second part 45 engaging a groove 46 in a neighbouring panel 31b.

When mounting the second connection element 32, 32b, the panel 31 is arranged in the intended position, and the connection element is in an diagonal position inserted into the space between two projections, as shown in Fig. 8, so that the grooves 41 are arranged around the protrusions 20, and then the second connection element 32b is rotated to be perpendicular to the projection in the place between two projections, e.g. the first and second projections, so that the second part 45 overlaps the edge 44 of the panel, as shown in Fig. 9. Then a neighbouring panel 31b is arrnaged by locking its groove 46 into the first part 43 of the already mounted connection element 32b and another connection element 32, 32b is arranged in place in the space between the neighbouring projection, i.e. the space between the third and second projections, so that the second part 45 overlaps the edge 44 of the neighbouring panel 31b. This prodedure is repeated until all the panels are mounted to the front face, and the worker may use several connection elements in the same space between two projections for mounting one panel. Hereby, a very simple mounting of panel covering is provided by the use of the protrusions and the stop face without using screws or similar penetration elements deteriorating the water resistance of the cover profile of the building element. By having the bended flanges 54 which provide stability in the mounted position as the flanges 54 abuts the projection section 18, and by bending the flanges in opposite directions, the connection element 32, 32b can still be rotated into place. If the connection element 32, 32b instead of having bended flanges had an increased thickness providing the stability, then the connection element 32, 32b could not be rotated into place.

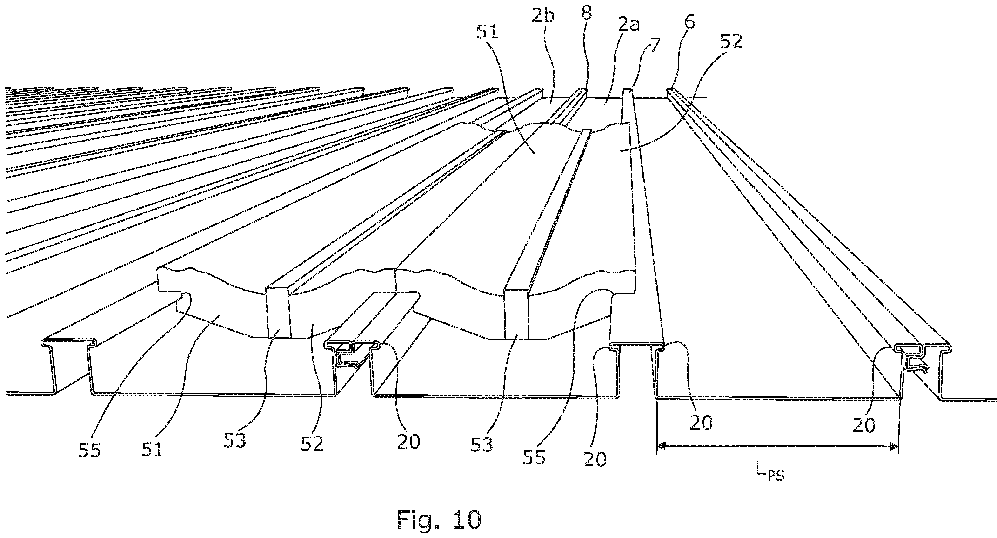

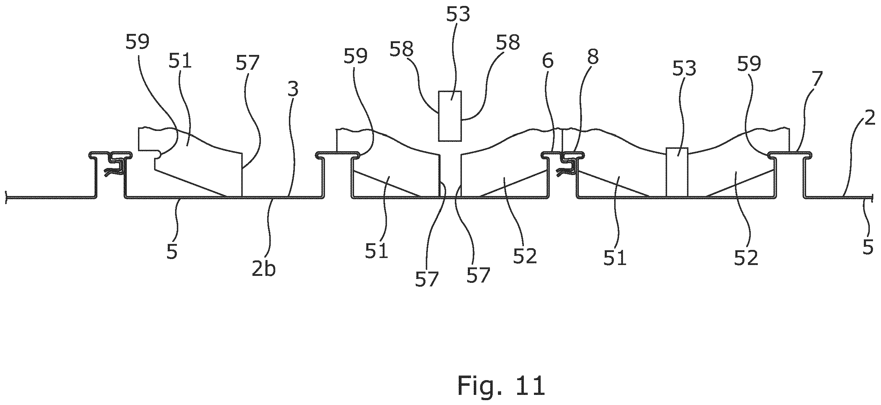

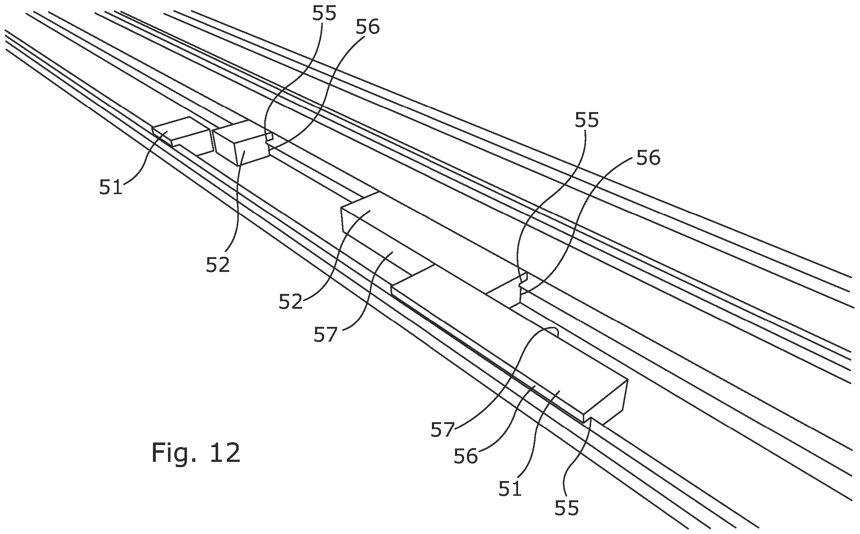

For making wood covering or the like, the modular building system 100, as shown in Figs. 10-12, may in yet another aspect comprise a first panel part 51 and a second panel part 52. Each of the panel parts has a panel groove 55 in a first side face 56 having a groove height HG corresponding to a protrusion height HP of the protrusion 20, and each of the panel parts has a second side face 57 opposing the first side face. In order to lock the first panel part and the second panel part between two adjacent projections, the first side face of the first panel part abuts the second side face of the second panel part. In Figs. 10 and 11, a third panel part 53 is squeezed in between the first panel part and the second panel part, as shown in Fig. 11, for locking the panel parts to the front face in between two adjacent projections. Firstly, the first panel is arranged so that a groove 59 is arranged around the protrusion 20, and the second panel is arranged so that a groove 59 is arranged around the protrusion 20, and then the third panel part 53 is squeezed in between the first panel part 51 and the second panel part 52. In Fig. 12, the locking of the first panel part and the second panel part between two adjacent projections is performed by arranging the first panel part and then the second panel, and subsequently the panels are slided in relation to each other, so the first side face of the first panel part abuts the second side face of the second panel part.

The use of the terms "first", "second", "third" and "fourth", "primary", "secondary", "tertiary", etc., does not imply any particular order, but are included to identify individual elements. Moreover, the use of the terms "first", "second", "third" and "fourth", "primary", "secondary", "tertiary", etc., does not denote any order or importance, but rather the terms "first", "second", "third" and "fourth", "primary", "secondary", "tertiary", etc., are used to distinguish one element from another. Note that the words "first", "second", "third" and "fourth", "primary", "secondary", "tertiary", etc., are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

## Claims

1. A modular building element (1) for building a construction, comprising:
- a first cover profile (2) comprising a front face (3), a back face (4), a base portion (5), a first projection (6), a second projection (7) and a third projection (8), the projections projecting from the base portion, and
- an insulation assembly (9) comprising a first insulation part (10) having a first side (11) abutting the back face and the base portion, the insulation assembly further comprising an opposite second side (12) with two oppositely positioned end sides (14, 15) and two oppositely positioned contact sides (16, 17),
wherein each projection is formed of a first projection section (18) extending perpendicular from the base portion, an intermediate portion (19), and a first protrusion (20) extending from the projection section forming a stop face (21) being parallel to and facing the base portion, the projection section being connected with the intermediate portion.

2. A modular building element according to claim 1, wherein the insulation assembly comprises a rigid body part (22) projecting from the first side of the insultation part and projecting into the second projection and abutting the projection section forming a cavity (23) between the rigid body part and the protrusion for receiving adhesive (24).

3. A modular building element according to claim 2, wherein the cavity has a cavity extension (H_{C}) along the projection section having a section length (H_{S}), the cavity extension being less than 50% of the section length, preferably less 30% more preferably less than 20%.

4. A modular building element according to any of the preceding claims, wherein the first projection forms a male portion (25), and the third projection forms a female portion (26) for receiving and interlocking the male portion of a neighbouring modular building element (1b).

5. A modular building element according to claim 4, wherein the male portion extends in a plane substantially perpendicular to the projection section and is arranged parallel to the base portion.

6. A modular building element according to claim 4 or 5, wherein the male portion has an end section (27) having a first male outer height (OH_{M1}) and a second male outer height (OH_{M2}), the first male outer height being greater than the second male outer height.

7. A modular building element according to claim 6, wherein the female portion has an end section (28) having a first female outer height (OH_{F1}) and a second female height (OH_{F2}), the first female outer height being greater than the second female outer height.

8. A modular building element according to claim 7, wherein the first female outer height is greater than first male outer height.

9. A modular building element according to claim 8, wherein the female portion has a first inner female height (IH_{F1}) at the end section and a second inner female height (IH_{F2}), and the male portion has a first inner male height (IH_{M1}) at the end section and a second inner male height (IH_{M2}), and the first male outer height is larger than the second inner female height.

10. A modular building element according to any of the preceding claims, further comprising a second cover profile (2b) having a base portion connected to the second side of the insulation assembly.

11. A modular building element according to claim 2 or 3, further comprising a second insulation part (10b) having a first side (11) abutting the back face and being connected to the base portion, the rigid body part is arranged between the first insulation part (10, 10a) and the second insulation part (10b).

12. A modular building system (100) comprising a plurality of modular building elements according to any of the preceding claims, wherein the male portion of one modular building element (2, 2a) is connected into and locked together with a second portion of a neighbouring modular building element (2b) for forming a wall, a floor or a roofing of a building.

13. A modular building system according to claim 12, further comprising a least one panel (31) and at least one first connection element (32) for connecting the panel on the front face of the modular building element, wherein the connection element comprises a locking face (33) and a base face (34), the base face abutting the base portion of the cover profile, and the locking face abutting the stop face, the locking face and the base face are arranged with a distance corresponding to a section length (H_{S}) so as to lock the connection element to the front face, the connection element has a first part (36) overlapping an edge (37) of the panel to fasten the panel to the front face and a second part (38) engaging a groove (39) in a neighbouring panel (31b).

14. A modular building system according to claim 12, further comprising a least one panel (31) and at least one second connection element (32b) for connecting the panel on the front face of the modular building element, the protrusion (20) having a protrusion height (H_{P}), wherein the second connection element comprises a groove (41) having a groove height (H_{G}) corresponding to the protrusion height and a connection element length (L_{C}) corresponding a length (LP) between two adjacent protrusions so as to lock the connection element to the front face, the connection element having a first part (43) overlapping an edge (44) of the panel to fasten the panel to the front face and a second part (45) engaging a groove (46) in a neighbouring panel (31b).

15. A modular building system according to claim 12, further comprising a first panel part (51) and a second panel part (52), each of the panel parts having a panel groove (55) in a first side face (56) having a groove height (H_{G}) corresponding to a protrusion height (H_{P}) of the protrusion (20), each of the panel parts having a second side face (57) opposing the first side face, the first side face of the first panel part abutting the second side face of the second panel part in order to lock the first panel part and the second panel part between two adjacent projections.
